# EUROPEAN PATENT SPECIFICATION

(11) **EP 1 476 883 B1**
(45) Date of publication and mention of the grant of the patent: **17.08.2005**
(21) Application number: 03702559.0
(22) Date of filing: 29.01.2003
(51) Int. Cl.: H01F 27/08, H01F 27/32, H01F 27/28, H01F 27/26

(54) **MEDIUM FREQUENCY TRANSFORMER**
MITTELFREQUENZTRANSFORMATOR
TRANSFORMATEUR A MOYENNE FREQUENCE

(30) Priority: 29.01.2002 DE 10203246
(43) Date of publication of application: 17.11.2004
(73) Proprietor: Bombardier Transportation GmbH, 13627 Berlin (DE)
(72) Inventor: KRAMER, Wilhelm, 69207 Sandhausen (DE); REINOLD, Harry, 76829 Landau (DE); FLERLAGE, Heinz, 67133 Maxdorf (DE)
(74) Representative: Clarkson, Paul Magnus
(86) International application number: PCT/EP2003/000889
(87) International publication number: WO 2003/065388

(56) References cited:
- EP-A- 0 766 273
- WO-A-99/57738
- FR-A- 2 784 787
- US-A- 3 633 272
- US-A- 4 945 332

## Description

The invention relates to a galvanically isolated medium-frequency transformer, particularly for use in railway applications.

Medium-frequency (MF) transformers are used in multi-system power converters (converter modules) together with boost converters. Conventional MF transformers are generally characterized by relatively large dimensions and relatively great weight. Known rectangular and cylindrical designs, for example, have a power-to-weight ratio of about 0.4 - 0.6 g/W at 6 - 12 KHz at a transmission capacity between 30 and 100 kW.

Due to the large dimensions and the relatively large specific weight, known MF transformers are connected in series after MF modules and generally cooled by air and/or water. Due to the heat generation, additional cooling plates are sometimes necessary, which take up further space in the electrical supply cabinet.

However, even known MF transformers of extremely low volume and weight are not suitable for direct installation in MF power converter modules, especially in the vicinity of IGBTs (Insulated Gate Bipolar Transistors).

Installation in a power converter module presupposes that the primary and secondary windings around the magnetic or ferrite core can be brought into the cooling air flow of the module cooler. The design and volume of known transformers precludes this. The windings in known transformers are supported and positioned in close proximity around the earthed core in order to obtain a good degree of efficiency. This results in the danger of partial discharges in the gaps between the windings, spacers and core.

Moreover, the alternative of arranging the MF transformer outside the electrical supply cabinet in aspirated atmospheric air necessitates additional protection against dirt contamination and is disadvantageous.

According to the preamble of claim 1 a transformer of this type is known from DE-4 227 891 A.

An object of the invention is to design an MF transformer of low volume and weight that may be integrated in known system converters (power converters).

The solution to this task according to the present invention is provided by the features according to claim 1.

The MF transformer according to the invention can, thanks to its low volume and weight, be integrated into known system converters (power converter modules). Additional installation space for the transformer outside the power converter module is then no longer required.

A power-to-weight ratio of 0.2 to 0.25 g/W at 6 - 12 kHz and a transmission capacity between 30 and 100 kW can be achieved with a transformer according to the invention.

The primary and secondary windings of the MF transformer and the insulation which reliably decouples and isolates them are arranged in a thermally and electrically insulated winding encapsulation, which is kept completely clear of the core so that there are air gaps ranging between 3 - 10 mm on all sides between the winding encapsulation and core.

Mechanical metallic mountings and supports such as clamp bars, bolted joints etc. used in conventional transformers to space the windings and cores are dispensed with. The core potential can float between the primary and secondary winding without partial discharges or arcing occurring. The dielectric displacement currents cause such a small charge in the core that they present no danger, even in the absence of protection against physical contact.

The relatively large air gap between the winding encapsulation and the core, which can be between 3 and 10 mm, allows efficient cooling of the core and of the winding of the MF transformer in the air flow of the power converter cooler. Consequently, the winding and connections of the transformer are arranged in the air duct of the power converter module in such a way that there are no points from which an arc can spring. This also contributes towards a particularly compact design.

In a preferred embodiment, the winding encapsulation is itself designed as a mounting for the core, in which the core (magnetic circuit) is placed.

Assembly of the MF transformer is preferably simplified by the fact that the magnetic part consists of part-cores, put together so that they enclose the primary and secondary windings. To assemble the transformer, the part-cores, to which adhesive is preferably applied in advance, only need to be pushed sideways into the winding encapsulation. This enables the winding encapsulation with the windings to be manufactured as a winding block, separately from the core.

In a preferred embodiment, the core consists of 2 pairs of U-shaped half-cores, with the end faces of two half-cores facing each other. The two pairs of U-shaped half-cores form a single core with a common central limb, around which the winding encapsulation is arranged. Alternatively, the core can also consist of U- and I-shaped part-cores.

To secure the core, angle plates embracing it are provided extending from the outer surface of the winding encapsulation. The core is preferably glued to the angle plates of the winding encapsulation. This allows the core to be securely retained without the use of electrically-conductive parts, and uninterrupted air gaps to be maintained between the winding encapsulation and the core. One advantage is that under the temperature changes due to the different moduli of elasticity, the core expands and contracts less than the winding encapsulation, so the specific expansion and contraction forces are low. One of the reasons for this is that the modulus of elasticity of the angle-plate shaped part of the encapsulation is lower by several powers of ten than that of the core material. The entire construction is more impact- and vibration-resistant than conventional core constructions. The same applies as regards freedom from noise.

It is advisable for the angle plates to incorporate ribs as stiffness. Clamps can be arranged on the end faces of the winding encapsulation for further lateral support of the core and as protection during assembly.

The electrical connections of the transformer are preferably arranged in shoulders at the end faces of the winding encapsulation. The preferably lateral connections of the transformer into the shoulders can advantageously be used as hanging points when casting the winding encapsulation.

The primary and secondary windings can comprise one or more part-windings. Primary and secondary conductors can also comprise sub-conductors.

The winding encapsulation is preferably a casting which hermetically encloses a primary and a secondary winding. Together with the windings it constitutes a block for mounting the core. The casting is preferably resin, preferably epoxy resin with thermally-conductive extenders, preferably aluminium nitride and/or silanised quartz powder and/or insulated metal particles, unless this impairs the casting insulation properties.

To achieve a stable, thin-walled and hermetically-sealed and mechanically stable winding encapsulation, the windings are preferably wrapped in fibre, preferably glassfibre cloth.

In a further, particularly preferred embodiment, the cooling of the MF transformer is improved by cooling plates projecting sideways from the end faces of the primary and/or secondary windings, inserted in between the windings. The cooling plates are preferably cast in position, gas- and water-tight, and insulated by a thin insulating layer with a low thermal resistance and good heat transfer characteristics, preferably a polyester coating.

A further improvement to the cooling is effected preferably with cooling plates in thermal contact with the primary and/or secondary winding, and placed on the outer surface of the windings. They can be in electrical contact with the conductors, for example by being soldered to them. Apart from that, the conductors are preferably given a thickened winding insulation in this area. The cooling plates on the outer surface of the windings can also be thermally connected with, but electrically insulated from, the conductors.

The primary and secondary windings are preferably single or multiple stacked block windings. They are preferably foil conductors, particularly copper foil, with layers of insulation material, e.g. mica, placed in between them.

The volume and weight and electrical losses of the MF transformer are also reduced, regardless of the presence of an encapsulated winding with air gaps in the core spaces, by the fact that the conductors of the primary and/or secondary windings comprise sub-conductors, which are transposed foil conductors.

The foil conductors preferably have lateral cut-outs. They are wound flat over one another in such a way that part of one sub-conductor is alternately underneath and above part of another sub-conductor. Two sub-conductors connected in parallel are provided preferably. However, more than two sub-conductors in a winding, transposed and connected in parallel, is also possible. An insulation layer is preferably laid in between the sub-conductors.

Transposing the foil windings has the advantage that with a compact design, it is not necessary to bring connecting wires out from the sides of the windings. The transposition reduces the impedance of the winding, which results in lower losses which in turn results in reduced heat generation. This means the transformer can be made smaller overall, and the performance increased.

To suppress partial discharges, even at relatively high voltages, it has proved particularly advantageous, irrespective of the design of the transformer, to insert layers of electrically-conductive material between the windings at the end faces of the primary and/or secondary windings in such a way that several layers of the primary and/or secondary windings are covered at the side, at least at the end face of the winding. The layers of slightly electrically-conductive dielectric materials above and below the insulating layers of the block winding have the effect that no major differences in electrical potential, which could result in partial discharges, occur in the winding encapsulation at the end faces of the windings towards to the floating cores. The slightly electrically-conductive dielectric material is preferably crepe tape.

To minimise eddy current losses in the windings, "air gaps" are preferably provided at all separation points in the core (magnetic circuit). In this connection, "air gap" is understood as a point where the magnetic field enters and leaves the core halves (surfaces), the distance between which is defined by a foil and the thickness of the adhesive layer inside the glued joint.

An embodiment of the invention is described in greater detail below, with reference to the drawings.

These are:
- Fig. 1: a perspective view of the medium-frequency transformer;
- Fig. 2: the MF transformer in Fig. 1 viewed in the direction of arrow II;
- Fig. 3: the MF transformer in Fig .1 viewed in the direction of arrow III;
- Fig. 4: a perspective view of the core of the transformer in Fig. 1;
- Fig. 5: a section through part of the winding encapsulation of the transformer in Fig. 1;
- Fig. 6: a perspective view of another embodiment of the MF transformer;
- Fig. 7: the transformer in Fig. 6 viewed in the direction of arrow II;
- Fig. 8: the transformer in Fig. 6 viewed in the direction of arrow III;
- Fig. 9: a partial section through the transformer in Fig. 6;
- Fig. 10: a partial section through an alternative embodiment of the transformer in Fig. 6;
- Fig. 11: a section through part of the winding encapsulation of the transformer in Fig. 6;
- Fig. 12: a perspective view of the transposed foil winding; and
- Fig. 13: a perspective view of an alternative embodiment of the core.

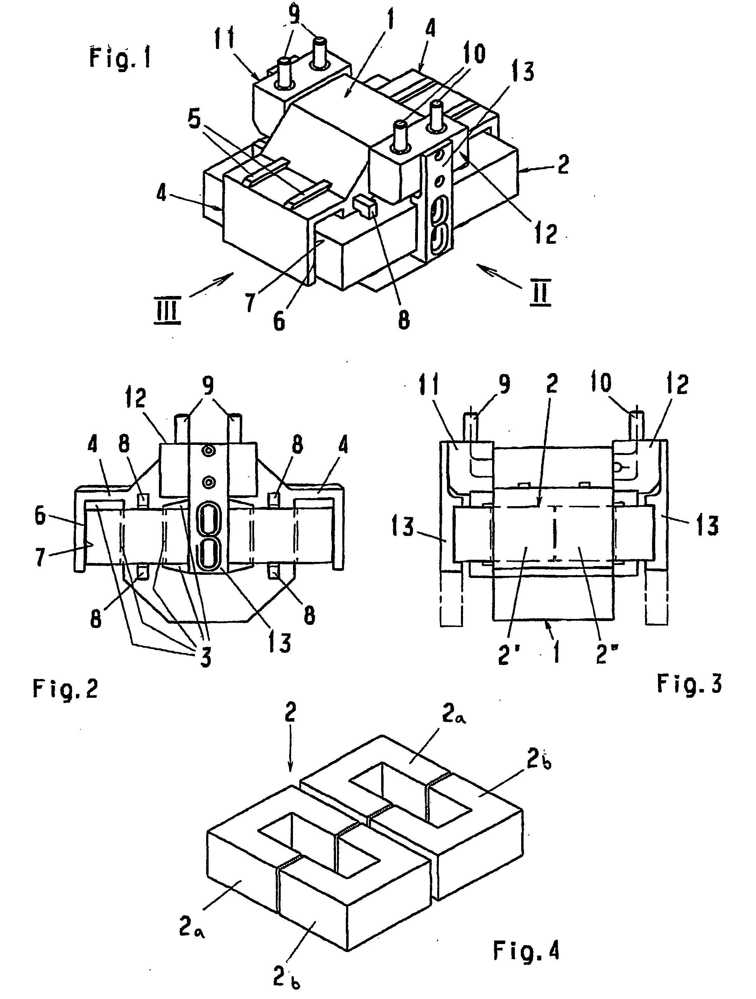

Fig. 1 shows a perspective view of the medium-frequency transformer, while Figs. 2 and 3 show the side elevations. The MF transformer comprises a winding encapsulation 1 with an essentially rectangular cross section and rounded corners. The winding encapsulation 1 consists of a primary winding, and a secondary winding divided into an upper and a lower layer (½/½), and is a block that hermetically encloses the windings. It is designed as a mounting for the core 2 of the transformer.

Fig. 4 shows a perspective view of the core 2 of a first embodiment. The core 2 is composed of two pairs of identical half-cores 2a, 2b, which are placed in the winding encapsulation 1 of the transformer with their ends facing each other. To fix the half-cores 2a, 2b in position, the two opposite sides of the winding encapsulation 1 are formed as angle plates 4 above the core 2, which together with the winding encapsulation embrace and hold the outer limbs of the core. The angle plates 4 are integral parts of the winding encapsulation. Two ribs 5 can be provided on the angle plates 4 for stiffness.

The external surfaces 6 of the core 2 are glued to the internal surfaces 7 of the winding units 4, such that between the internal surfaces 8 of the core 2 and the winding encapsulation 1, on the one side, air openings 3 are left and, on the other side, the surfaces 6 and 7 can also be filled in with glue. As a result, the core 2, except for the surfaces 6 and 7, is at all times freely suspended in the winding.

At the frontal surfaces of the winding encapsulation 1 two extensions 8 in each case are fitted to the upper and lower side of the core 2, on which the core may rest during gluing but which are also distanced from the frontal sides of the winding encapsulation.

The electrical connections 9 and 10 of the primary and secondary winding are located in the extensions 11 and 12 at the frontal sides of the spooling winding. Brackets 13 may be attached to the extensions 11 and 12 of the winding encapsulation, to additionally hold the core to the side, although this is not necessary. The core may be held sufficiently firmly and in the winding encapsulation by the glue alone, with little or no unwanted noise.

All parts for fixing the core consist of non-conducting material, so that the core can float freely in terms of voltage. The core, in contrast to conventional transformers, is not earthed. The preference is for ferrite cores or nanocrystal or amorphous cores.

The extensions 11 and 12 include seals (not shown) which seal against the openings through the supporting plate of the module and are used for the mechanical fastening of the transformer. For further support, moulded bushes can also be provided.

Because of its small volume or small mode of construction and its low weight, the transformer can be installed in the cooling current of a medium frequency rectifier module. It is installed in such a way that the air flow flows over all surfaces and flows through the air opening 3.

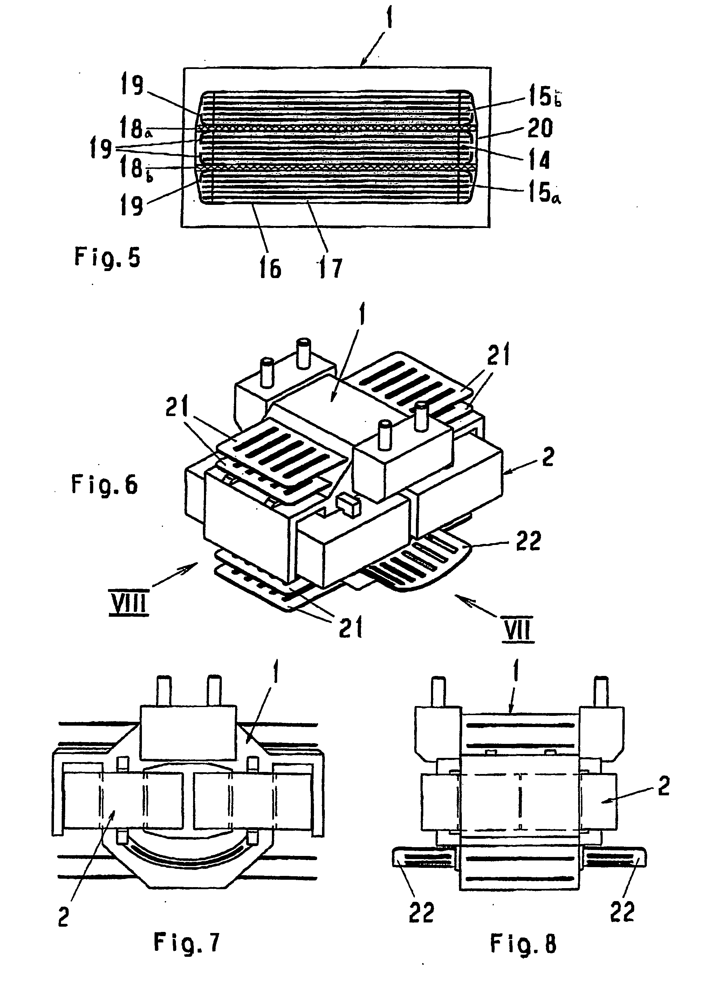

Figure 5 shows a section through the winding encapsulation 1 in the area of one of the two core windows. The winding encapsulation comprises the primary winding 14 and the secondary winding 15, which consists of two subsidiary windings 15 a and 15 b. The wires are copper foil wires 16, which are wound in an essentially square form with the interim layer of a winding insulation 17.

The winding is composed of an internal first secondary subsidiary winding 15 a, an intermediate primary winding 14 and an external secondary winding 15 b. The windings are externally switched to the extensions 11 and 12 of the winding encapsulation 1. The windings 14, 15 a and 15 b are separated by medium frequency scale layer insulations 18 a and 18 b preferably made of mica. On the frontal sides of the individual winding layers above or below the mica insulation, bands 19 of electrically conducting material, preferably semiconductor "crepe bands", are introduced, which envelope the winding layers of the primary winding 14 and the first and second secondary subsidiary winding 15 a and 15b in the area of the frontal sides. The central crepe band 19, for example, is shifted to the side in such a way that on the one hand it is below the layer insulation 18 a and above the external winding and on the other hand above the layer insulation 18 b and below the internal winding. As a result, partial discharges in the area of the frontal sides, the layer insulation and in the area of the thin-walled edges of the foils are avoided.

All windings are enveloped in a fixed and hermetically sealed manner by a casting block from a resin, preferably epoxy resin with filling materials which are capable of transmitting heat. The filling materials capable of transmitting heat are for preference aluminium nitride and/or silanised quartz powder or metal particles insulated at their upper surface by oxidisation, provided that the moulding insulation properties are not impaired by the metal particles. The windings 14, 15 a and 15 b are enveloped by a gross grain glass silk band 20, as a result of which the winding encapsulation is extremely stable and resistant to heat and cold shock.

Figures 6 and 8 show another execution example of the medium frequency transformer. This form of execution is different from the execution example described with reference to Figures 1-6 in as much as it is provided with additional cooling sheets.

On mutually facing sides of the mantle surface of the winding encapsulation 1 above and below the core 2 in each case a cooling sheet 21 which is essentially U-shape is added to the windings. The middle spar of the cooling sheets 21, for example, is soldered to the foil wire.

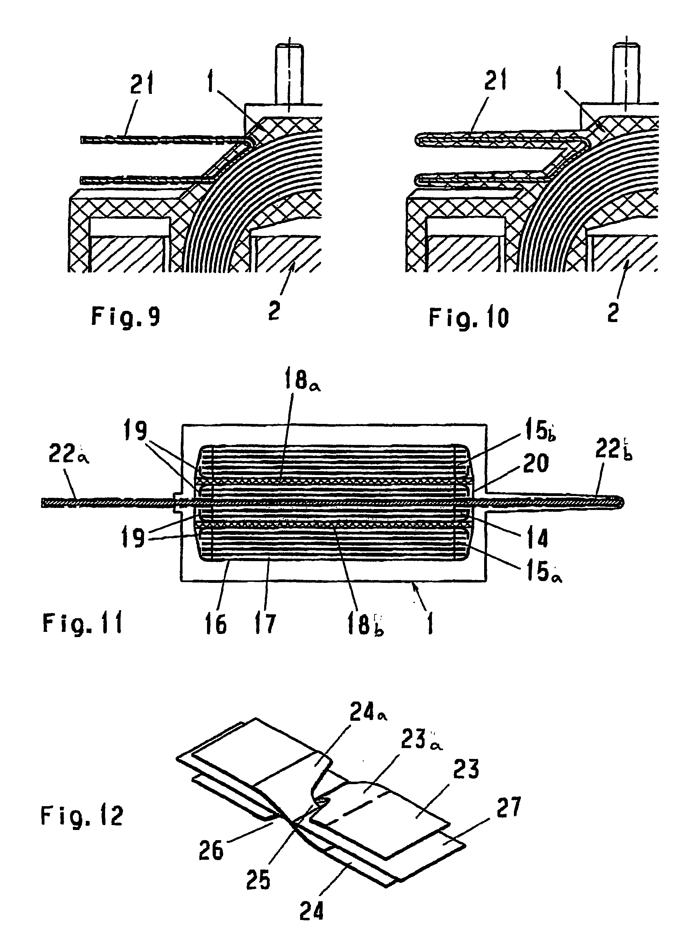

Figure 9 shows a section through the medium frequency transformer in the area of a cooling sheet 21. For insulation, the cooling sheet is covered with powder. The cooling sheets 21 can, however, also be enveloped by the casting of the winding encapsulation 1 (Figure 10).

Further cooling sheets 22 are provided at the frontal sides of the winding encapsulation 1 below the core 2. Figure 11 shows a section through the winding encapsulation in the area of the cooling sheet 22. The cooling sheet 22 stretches through the primary winding 14. The parts of the cooling sheets projecting from the winding encapsulation 1 are either insulated with a polyester coating or embedded in the casting of the winding encapsulation 1. For illustration, Figure 11 shows on the left side a cooling sheet 22 a with polyester coating and on the right side a cooling sheet 22 b embedded in the casting resin. In practice, however, the same insulation material is used on both sides.

The cooling sheets 22 are bent to match the bending of the windings. They may be, for example, copper bending parts or aluminium profile units. Depending on the mode of construction, cooling sheets 21 can also be provided only at the mantle surfaces or cooling sheets 2 only at the frontal surfaces of the winding encapsulation 1.

Figure 12 gives a perspective illustration of two crossed conductors 23 and 24 of the primary and/or secondary winding. The copper conductors have a thickness of approximately 0.1-0.2 mm at 10 kHz. In the area of the crossover, the conductors 23 and 24 have a reinforced cross section 23 a and 24 a for better discharge of heat. The conductors in each case on their mutually facing sides have a U-shape indent 25 and 26. Between the conductors there is an insulation layer 27, which is also indented. The conductors 23 and 24 are arranged in such a way that they each lie alternately below or above the insulation layer 27.

This type of crossover is in principle possible with any number of conductors, whereby the conductors and insulation layers must be indented appropriately.

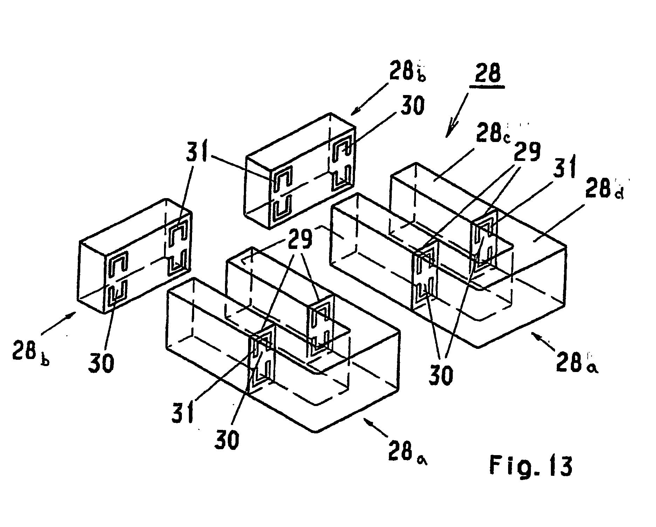

Figure 13 shows an alternative embodiment of the core 28, which is different from the embodiment of Figure 4 by virtue of the fact that the core is composed of two pairs of a U-shape 28 a and an I-shape 28 b semi-core. The U-shape and the I-shape semi-core are in each case glued to each other with the formation of air openings 29 of a defined thickness to control the magnetisation current. The gluing of the semi-cores at their mutual points of contact 30 takes place via intermediate U-shaped foil spacing layers 31 made, for example, of insulating material, whereby the thickness of the foils defines the width of the air openings. The foil spacing layers 31 are placed into the still pasty glue, before the semi-cores are put together. As a result, a highly stable binding is obtained. Eddy current formation and development of heat in the related windings is to a large extent prevented by this type of binding.

It is an advantage if the core has a relatively large number of openings, each of which is however relatively narrow. As such, the U-form semi-cores 28 b, for their part, may consist of several subsidiary cores 28c and 28d, which in turn are glued to each other at their points of contact 30 with an interim layer of U-shape distance foils 31 of defined thickness. Figure 13 shows the core 28 before the gluing of the relevant semi-cores 28 a and 28 b.

## Claims

1. A medium frequency transformer with a core (2, 28) and primary and secondary magnetically coupled windings (14, 15), **characterised in that** the windings (14, 15) are enclosed in a winding encapsulation (1), which is thermally and electrically insulated and freely floating as a result of the presence of air gaps (3) on all sides between the winding encapsulation (1) and the core (2, 28).

2. A medium frequency transformer in accordance with claim 1, **characterised by** the fact that the winding encapsulation (1) is designed as a holder for the core (2), in which the core is installed.

3. A medium frequency transformer in accordance with claim 2, **characterised by** the fact that the core (2) is composed of subsidiary cores (2a, 2b) enveloping the primary and secondary winding (14, 15).

4. A medium frequency transformer in accordance with claim 3, **characterised by** the fact that the core (2) is composed of two pairs of U-shape semi-cores (2a, 2b), with in each case the end surfaces of two semi-cores applied to each other, or the core (28) is composed of two pairs of a U-shape semi-core (28 a) and an I-shape semi-core (28 b).

5. A medium frequency transformer in accordance with any one of claims 1 to 4, **characterised by** the fact that on the outer surface of the winding encapsulation (1) angle plates (4) supporting the core (2) are provided.

6. A medium frequency transformer in accordance with claim 5, **characterised by** the fact that the core (2) is glued to the angle plates (14) of the winding encapsulation (1).

7. A medium frequency transformer in accordance with claim 6, **characterised by** the fact that the angle plates (4) have ribs (5) for reinforcement.

8. A medium frequency transformer in accordance with any one of claims 1 to 7, **characterised by** the fact that on the frontal sides of the winding encapsulation (1) brackets (13) are installed for laterally supporting the core (2).

9. A medium frequency transformer in accordance with any one of claims 1 to 8, **characterised by** the fact that the winding encapsulation (1) has extensions (11, 12) cast on to the frontal sides, on which the electrical connections (9, 10) are installed.

10. A medium frequency transformer in accordance with any one of claims 1 to 9, **characterised by** the fact that the winding encapsulation (1) is a moulded block hermetically enveloping the primary and secondary winding (14 and 15).

11. A medium frequency transformer in accordance with claim 10, **characterised by** the fact that the moulded block is composed of a resin, preferably epoxy resin with filling material capable of transmitting heat, preferably aluminium nitride and/or silanated quartz powder.

12. A medium frequency transformer in accordance with any one of claims 1 to 11, **characterised by** the fact that the primary and secondary winding (14, 15) are enveloped by fibres (20), preferably glass fibre.

13. A medium frequency transformer in accordance with any one of claims 1 to 12, **characterised by** the fact that laterally protruding cooling sheets (22) are installed between the windings of the primary and secondary windings (14, 15) at their end faces.

14. A medium frequency transformer in accordance with any one of claims 1 to 13, **characterised by** the fact that on the outer surfaces of the primary and secondary winding (14, 15) cooling sheets (21) which have thermal contact with the windings are installed.

15. A medium frequency transformer in accordance with claims 13 or 14, **characterised by** the fact that the cooling sheets (122) are cast on or insulated with a coating preferably of polyester.

16. A medium frequency transformer in accordance with any one of claims 1 to 15, **characterised by** the fact that the primary and secondary winding are boxed block windings.

17. A medium frequency transformer in accordance with any one of claims 1 to 16, **characterised by** the fact that the primary and secondary winding (14, 15) are foil wires (17), preferably of copper foil, between which are located insulating intermediate layers (18 a, 18 b), preferably of mica.

18. A medium frequency transformer in accordance with any one of claims 1 to 17, **characterised by** the fact that the conductors of the primary and/or secondary winding (14, 15) comprise conductors (23 and 24), which are interleafed foil strips.

19. A medium frequency transformer in accordance with claim 18, **characterised by** the fact that the conductors (23, 24) have indents on their edges (25 and 26), such that the conductors are wound in a superimposed manner whereby each conductor is alternatively above or below the other conductor.

20. A medium frequency transformer in accordance with claim 18 or claim 19, **characterised by** an intermediate insulation layer (27) between the conductors (23, 24).

21. A medium frequency transformer in accordance with any one of claims 1 to 20, **characterised by** the fact that electrically conducting materials (19) are introduced at the frontal side of the primary and secondary winding (14, 15) between the windings in such a way that several winding layers of the primary and secondary winding are at least enveloped in the area of the frontal sides of the windings.

22. A medium frequency transformer in accordance with claim 21, **characterised by** the fact that the electrically conducting material is a crepe band.

## Patentansprüche

1. Mittelfrequenz-Transformator mit einem Kern (2, 28) und Primär- und Sekundärwicklung (14, 15), die magnetisch gekoppelt sind, **dadurch gekennzeichnet, daß** die Wicklungen (14, 15) in einem Spulenumguß
(1) angeordnet sind, der unter Bildung von allseitigen Luftspalten (3) zwischen Spulenumguß (1) und Kern (2, 28) thermisch und elektrisch isoliert und frei gehalten ist.

2. Mittelfrequenz-Transformator nach Anspruch 1, **dadurch gekennzeichnet, daß** der Spulenumguß (1) als Halterung für den Kern (2) ausgebildet ist, in die der Kern eingesetzt ist.

3. Mittelfrequenz-Transformator nach Anspruch 2, **dadurch gekennzeichnet, daß** der Kern (2) aus Teilkernen (2', 2") Primär- und Sekundärwicklung (14, 15) umschließend zusammengesetzt ist.

4. Mittelfrequenz-Transformator nach Anspruch 3, **dadurch gekennzeichnet, daß** der Kern (2) aus zwei Paaren von U-förmigen Halbkernen (2', 2") zusammengesetzt ist, wobei die Stirnseiten jeweils zweier Halbkerne einander zugewandt sind, oder der Kern (28) aus zwei Paaren von einem U-förmigen Halbkern (28') und einem I-förmigen Halbkem (28") zusammengesetzt ist.

5. Mittelfrequenz-Transformator nach einem der Ansprüche 1 - 4, **dadurch gekennzeichnet, daß** an der Mantelfläche des Spulenumgusses (1) den Kern (2) umgreifende Winkelstücke (4) vorgesehen sind.

6. Mittelfrequenz-Transformator nach Anspruch 5, **dadurch gekennzeichnet, daß** der Kern (2) mit den Winkelstücken (4) des Spulenumgusses (1) verklebt ist.

7. Mittelfrequenz-Transformator nach Anspruch 6, **dadurch gekennzeichnet, daß** die Winkelstücke (4) zur Versteifung Rippen (33) aufweisen.

8. Mittelfrequenz-Transformator nach einem der Ansprüche 1 - 7, **dadurch gekennzeichnet, daß** an den Stirnseiten des Spulenumgusses (1) den Kern (2) seitlich abstützende Klammern (13) angeordnet sind.

9. Mittelfrequenz-Transformator nach einem der Ansprüche 1 - 8, **dadurch gekennzeichnet, daß** der Spulenumguß (1) an den Stirnseiten angegossene Ansatzteile (11, 12) aufweist, an denen die elektrischen Anschlüsse (9, 10) angeordnet sind.

10. Mittelfrequenz-Transformator nach einem der Ansprüche 1 - 9, **dadurch gekennzeichnet, daß** der Spulenumguß (1) eine die Primär- und Sekundärwicklung (14, 15) hermetisch abschließende Vergußmasse ist.

11. Mittelfrequenz-Transformator nach Anspruch 10, **dadurch gekennzeichnet, daß** die Vergußmasse aus einem Harz, vorzugsweise Epoxidharz mit wärmeleitfähigen Füllstoffen, vorzugsweise Aluminiumnitrid und/oder silanisiertem Quarzmehl, zusammengesetzt ist.

12. Mittelfrequenz-Transformator nach einem der Ansprüche 1 - 11, **dadurch gekennzeichnet, daß** Primär- und Sekundärwicklung (14, 15) mit Fasern (20), vorzugsweise Glasseide umwickelt sind.

13. Mittelfrequenz-Transformator nach einem der Ansprüche 1 - 12, **dadurch gekennzeichnet, daß** in Primär- und/oder Sekundärwicklung (14, 15) an den Stirnflächen der Wicklungen seitlich vorstehende Kühlbleche (22) zwischen die Wicklungen eingelegt sind.

14. Mittelfrequenz-Transformator nach einem der Ansprüche 1 - 13, **dadurch gekennzeichnet, daß** an den Mantelflächen der Primär- und/oder Sekundärwicklung (14, 15) die Wicklungen thermisch kontaktierende Kühlbleche (2 1 ) angesetzt sind.

15. Mittelfrequenz-Transformator nach Anspruch 13 oder 14, **dadurch gekennzeichnet, daß** die Kühlbleche (21, 22) eingegossen oder mit einer Beschichtung, vorzugsweise einer Polyesterbeschichtung, isoliert sind.

16. Mittelfrequenz-Transformator nach einem der Ansprüche 1 - 15, **dadurch gekennzeichnet, daß** Primär- und Sekundärwicklung geschachtelte Blockwicklungen sind.

17. Mittelfrequenz-Transformator nach einem Ansprüche 1 - 16, **dadurch gekennzeichnet, daß** Primär- und Sekundärwicklung (14, 15) Folienleiter (17), vorzugsweise Cu-Folien, sind, zwischen denen isolierende Zwischenlagen (18', 18"), vorzugsweise aus Glimmer, angeordnet sind.

18. Mittelfrequenz-Transformator nach einem der Ansprüche 1 - 17, **dadurch** gekennzeichent, daß die Leiter der Primär- und/oder Sekundärwicklung (14, 15) Teilleiter (23, 24) umfassen, die geschränkt gewickelte Folienleiter sind.

19. Mittelfrequenz-Transformator nach Anspruch 18, **dadurch gekennzeichnet, daß** die Folienleiter (23, 24) seitliche Einschnitte (25, 26) aufweisen, wobei die Folienleiter derart übereinander liegend gewickelt sind, daß ein Teilstück eines Leiters wechselweise oberhalb bzw. unterhalb des Teilstücks eines anderen Teilleiters liegt.

20. Mittelfrequenz-Transformator nach Anspruch 18 oder 19, **dadurch gekennzeichnet, daß** zwischen die Teilleiter (23, 24) jeweils eine Zwischenisolation (27) eingelegt ist.

21. Mittelfrequenz-Transformator nach einem der Ansprüche 1 bis 20, **dadurch gekennzeichnet, daß** elektrisch leitende Materialien (19) an den Stirnseiten von Primär- und/oder Sekundärwicklung (14, 15) zwischen die Wicklungen derart eingelegt sind, daß mehrere Wicklungslagen der Primär- und/oder Sekundärwicklung zumindest im Bereich der Stirnseiten der Wicklungen umfaßt werden.

22. Mittelfrequenz-Transformator nach Anspruch 21, **dadurch gekennzeichnet, daß** das elektrisch leitende Material ein Kreppband ist.

## Revendications

1. Un transformateur moyenne fréquence doté d'un noyau magnétique (2, 28) et de bobines primaire et secondaire couplées magnétiquement (14, 15), **caractérisé en ce que** les bobines (14, 15) sont intégrées dans un enrobage de bobine (1) qui est isolé thermiquement et électriquement, tout en permettant un flottement dû à la présence de couches d'air de tous les côtés entre l'enrobage de bobine (1) et le noyau magnétique (2, 28).

2. Un transformateur moyenne fréquence selon la revendication 1, **caractérisé en ce que** l'enrobage de bobine (1) est conçu comme support du noyau magnétique (2), dans lequel le noyau magnétique est installé.

3. Un transformateur moyenne fréquence selon la revendication 2, **caractérisé en ce que** que le noyau magnétique (2) est composé de noyaux subsidiaires (2a, 2b) enveloppant les bobines primaire et secondaire (14, 15).

4. Un transformateur moyenne fréquence selon la revendication 3, **caractérisé en ce que** le noyau magnétique (2) est composé de deux paires de demi-noyaux en forme de U (2a, 2b), avec pour chaque paire, les surfaces des extrémités des deux demi-noyaux s'appuyant l'une sur l'autre, ou bien ce que le noyau magnétique (28) est composé de deux paires de demi-noyaux en forme de U (28a) et d'un demi noyau en forme de I (28b).

5. Un transformateur moyenne fréquence selon l'une des revendications de 1 à 4, **caractérisé en ce que** sur la surface extérieure de l'enrobage de bobine (1), sont prévues des équerres (4) supportant le noyau magnétique (2).

6. Un transformateur moyenne fréquence selon la revendication 5, **caractérisé en ce que** le noyau magnétique (2) est collé aux équerres (14) de l'enrobage de bobine (1).

7. Un transformateur moyenne fréquence selon la revendication 6, **caractérisé en ce que** les équerres (4) ont des nervures de raidissage (5).

8. Un transformateur moyenne fréquence selon l'une des revendications de 1 à 7, **caractérisé en ce que** sur les extrémités de l'enrobage de bobine (1), sont installées des attaches (13) pour supporter latéralement le noyau magnétique (2).

9. Un transformateur moyenne fréquence selon l'une des revendications de 1 à 8, **caractérisé en ce que** l'enrobage de bobine (1) a, au niveau des extrémités, des prolongateurs moulés (11, 12) sur lesquels sont installées les connections électriques (9, 10).

10. Un transformateur moyenne fréquence selon l'une des revendications 1 à 9, **caractérisé en ce que** l'enrobage de bobine (1) est un bloc moulé, enveloppant hermétiquement les bobines primaire et secondaire (14, 15).

11. Un transformateur moyenne fréquence selon la revendication 10, **caractérisé en ce que** le bloc moulé est composé de résine, de préférence époxy, avec un matériau de remplissage capable de transmettre la chaleur, de préférence un nitrure d'aluminium et/ou une poudre de quartz silané.

12. Un transformateur moyenne fréquence selon l'une des revendications de 1 à 11, **caractérisé en ce que** les bobines primaire et secondaire (14, 15) sont enveloppées de fibres (20), de préférence des fibres de verre.

13. Un transformateur moyenne fréquence selon l'une des revendications de 1 à 12, **caractérisé en ce que** des feuillets de refroidissement placés latéralement en saillie (22) sont installés entre les bobines primaire et secondaire (14, 15) à leurs extrémités.

14. Un transformateur moyenne fréquence selon l'une des revendications de 1 à 13, **caractérisé en ce que** sur les surfaces extérieures des bobines primaire et secondaire (14, 15) sont installées des feuillets de refroidissements (21) établissant un contact thermique avec les bobines.

15. Un transformateur moyenne fréquence selon les revendications 13 ou 14, **caractérisé en ce que** les feuillets de refroidissements (122) sont moulés ou isolés avec une couche, de préférence de polyester.

16. Un transformateur moyenne fréquence selon l'une des revendications de 1 à 15, **caractérisé en ce que** les bobines primaire et secondaire (14, 15) forment des bobines en blocs caissons.

17. Un transformateur moyenne fréquence selon l'une des revendications de 1 à 16, **caractérisé en ce que** les bobines primaire et secondaire (14, 15) sont faites des fils plats (17), de préférence en cuivre, entre lesquels sont intercalées des couches intermédiaires isolantes (18a, 18b), de préférence en mica.

18. Un transformateur moyenne fréquence selon l'une des revendications de 1 à 17, **caractérisé en ce que** les conducteurs des bobines primaire et/ou secondaire (14, 15) comprennent des conducteurs (23, 24) faits de bandes de feuillets intercalés.

19. Un transformateur moyenne fréquence selon la revendication 18 **caractérisé en ce que** les conducteurs (23, 24) ont des crans sur leurs bords (25, 26), de telle sorte que les conducteurs sont bobinés de manière superposée où chaque conducteur est alternativement au-dessus ou au-dessous de l'autre conducteur.

20. Un transformateur moyenne fréquence selon la revendication 18 ou 19, **caractérisé par** une couche intermédiaire (27) isolante entre les conducteurs (23, 24).

21. Un transformateur moyenne fréquence selon l'une des revendications de 1 à 20, **caractérisé en ce que** des matériaux conducteurs électriques (19) sont introduits sur la face avant des bobines primaire et secondaire (14, 15) entre les bobinages, de telle sorte que plusieurs couches de bobinage sont enveloppées au moins dans la partie de la face avant des bobines.

22. Un transformateur moyenne fréquence selon la revendication 21, **caractérisé en ce que** le matériau conducteur électrique est une bande crêpée.
